Europäisches Patentamt

European Patent Office

Office européen des brevets

(19)

(11) Veröffentlichungsnummer: **0 281 921 B1**

(12) # EUROPÄISCHE PATENTSCHRIFT

(45) Veröffentlichungstag der Patentschrift: **10.03.93**

(21) Anmeldenummer: **88103161.1**

(22) Anmeldetag: **02.03.88**

(51) Int. Cl.5: **D04H 1/64**, D06M 15/423, C08L 61/02, C08L 61/00

(54) **Mit einer gehärteten Harzmischung gebundene Mineral- und Textil-Vliese.**

(30) Priorität: **11.03.87 DE 3707691**

(43) Veröffentlichungstag der Anmeldung:
**14.09.88 Patentblatt  88/37**

(45) Bekanntmachung des Hinweises auf die
Patenterteilung:
**10.03.93 Patentblatt  93/10**

(84) Benannte Vertragsstaaten:
**DE FR GB IT**

(56) Entgegenhaltungen:
**EP-A- 0 091 341**
**EP-A- 0 206 588**
**US-A- 2 967 787**

(73) Patentinhaber: **BASF Aktiengesellschaft**
**Carl-Bosch-Strasse 38**
**W-6700 Ludwigshafen(DE)**

(72) Erfinder: **Kempter, Fritz Erdmann, Dr.**
**L 2,14**
**W-6800 Mannheim 1(DE)**
Erfinder: **Matejcek, Franz, Dr.**
**Theodor-Heuss-Strasse 10**
**W-6715 Lambsheim(DE)**
Erfinder: **Neubach, Werner**
**Lindenberger Strasse 9**
**W-6700 Ludwigshafen(DE)**
Erfinder: **Busse, Gerd**
**Thomas-Mann-Strasse 28**
**W-6704 Mutterstadt(DE)**

# EP 0 281 921 B1

## Beschreibung

Die vorliegende Erfindung betrifft Vliese aus anorganischem oder organischem Fasermaterial, gebunden mit einer gehärteten Harzmischung, bestehend im wesentlichen aus

A) 5 bis 80 Gew.% eines wasserlöslichen, durch alkalische Kondensation hergestellten Produktes der Carbonylzahl 0 bis 200 aus 0,1 bis 0,4 mol eines aliphatischen oder cycloaliphatischen kondensationsfähigen Ketons und 1 mol Formaldehyd und

B) 20 bis 95 Gew.% eines wasserlöslichen Amino- und/oder Phenolharzes.

Außerdem betrifft die Erfindung Vliese mit speziellen Bindemitteln gemäß den Unteransprüchen sowie ein Verfahren zur Herstellung der Vliese.

Vliesbindemittel auf der Basis unveretherter oder veretherter Aminoharze, z.B. Harnstoff/Formaldehydharzen oder Melamin/Formaldehydharzen, sind seit langer Zeit bekannt.

Handelt es sich dabei um Harnstoff/Formaldehyd-Harze oder um speziell hydrophilierte Melaminharze gemäß den DE-A-30 34 248, DE-A-15 95 368, DE-A-11 58 705, DE-A-12 10 174, DE-A-12 10 173 und DE-A-21 44 543, weisen die mit diesen Harzen beschichteten Vliese relativ hohe Kochwaschverluste auf.

Vliesbindemittel auf der Basis von im wesentlichen unveretherten Melaminharzen sind nur begrenzt lagerstabil. Bei einigen der zum Einsatz kommenden Bindemittel ist der Gehalt an freiem Formaldehyd unerwünscht hoch. Andere Bindemittel dieses Typs spalten beim Härten ebenfalls unerwünscht hohe Anteile des eingebauten Formaldehyds ab.

Der Erfindung lag daher die Aufgabe zugrunde, mit einer gehärteten Harzmischung gebundene Mineral- und Textil-Vliese bereitzustellen, die die oben genannten Nachteile nicht aufweisen, und bei deren Herstellung möglichst wenig Formaldehyd abgespalten wird.

Demgemäß wurden die eingangs definierten Vliese gefunden.

Keton-Formaldehyd-Kondensationsprodukte sind bekannt und z.B. in Houben-Weyl, Methoden der organischen Chemie, Band XIV/2, 1963, S. 416 ff. beschrieben. Je nach molarem Keton-Formaldehyd-Verhältnis werden hochmolekulare oder methylolreiche oder cyclische Acetale oder Ether gebildet.

Zur Herstellung der Komponente A) eignen sich die niedrigen Glieder der homologen Reihe der Dialkylketone wie Aceton, Methylethylketon, Diacetonalkohol oder Cyclohexanon. Begrenzt wird der Einsatz der höhermolekularen Ketone durch die angestrebte Wasserlöslichkeit der entsprechenden Kondensationsprodukte. Besonders bevorzugt wird Aceton eingesetzt.

Das Molverhältnis Keton-Formaldehyd entspricht vorzugsweise der reziproken Anzahl der in den Ketonen zur Verfügung stehenden aciden H-Atome.

Für Aceton mit der höchstmöglichen Anzahl reaktionsfähiger CH-Bindungen (6) wird ein molares Keton-Formaldehyd-Verhältnis von 1:3,75 bis 1:7,0, bevorzugt 1:4,0 bis 1:6,0, empfohlen. Für Ketone mit 5 reaktionsfähigen CH-Bindungen gelten folgende Verhältnisse: 1:3,0 bis 1:6,0, bevorzugt 1:3,5 bis 1:5,0. Bei den angegebenen Einsatzverhältnissen von Keton und Formaldehyd wird praktisch der gesamte Formaldehyd umgesetzt, so daß die wäßrige Reaktionslösung weniger als 1,5 Gew.%, in der Regel sogar weniger als 0,2 Gew.% freien Formaldehyd enthält.

Die alkalische Kondensation der Ketone mit Formaldehyd wird bevorzugt in wäßriger Lösung, eventuell in Anwesenheit von $C_1$- bis $C_4$-Alkoholen, bei Temperaturen von 20 bis 70°C, bevorzugt 30 bis 60°C, durchgeführt, wobei besonders gegen Ende der Reaktion, also bei niedrigen Gehalten an freiem Formaldehyd, niedrigere Temperaturen bevorzugt angewendet werden. Vorzugsweise nimmt man die Kondensation bei einem pH-Wert zwischen 8 und 12, besonders zwischen 10 und 11,5 vor.

Um eine möglichst große Umsetzung der Keto-Gruppen des Ketonharzes zu erreichen, die durch die niedrige Carbonylzahl (mg KOH/g Feststoff, bestimmt nach der Planwäge-Glasmethode nach Heidbrink, (DIN 53 189) von 0 bis 200, bevorzugt 40 bis 180, gekennzeichnet ist, werden für die Kondensation 5 bis 15 Gew.% Base, bevorzugt 6 bis 12 Gew.%, bezogen auf Kondensat, empfohlen. Die Basen können in Form ihrer unlöslichen Salze entfernt werden. Als Base wird bevorzugt Calciumhydroxid in bekannter Weise eingesetzt und in Form seiner Formiate, Oxalate, Phosphate oder Sulfate abgetrennt. Geeignete andere Basen sind z.B. Natriumhydroxid, Kaliumhydroxid, Natriumcarbonat, Kaliumcarbonat, Bariumhydroxid.

Die Kondensationsprodukte A) liegen in Form farbloser bis leicht gefärbter viskoser Substanzen vor. Der Aschegehalt wird nach Entfernung der unlöslichen Salze im allgemeinen mit 0,1 bis 0,3 Gew.% bestimmt. Der Feststoffgehalt der Produkte kann bis etwa 98 Gew.% gesteigert werden. Die Bestimmung des Feststoffgehaltes erfolgte nach den modifizierten DIN-Vorschriften 53 216 und 53 189 (s. Seite 6).

Als Vernetzungsmittel für die Keton/Formaldehyd-Kondensationsprodukte werden die an sich bekannten wasserlöslichen Amino und/oder Phenolharze sowie deren Vorkondensate verwendet. Diese Harze können in Form ihrer Kondensationsprodukte mit $C_1$- bis $C_{10}$-Aldehyden, bevorzugt aliphatischen $C_1$- bis $C_5$-Mono- und Dialdehyden wie Formaldehyd, Glyoxal und Glutardialdehyd, unverethert, partiell verethert und vollstän-

2

dig verethert mit beispielsweise aliphatischen Alkoholen mit 1 bis 4 C-Atomen wie Methanol, Ethanol, n-Propanol, n-Butanol, Methylglykol oder deren Gemischen vorliegen. Geeignete Harze sind in den DE-A-34 30 248, DE-A-15 95 368, DE-A-11 58 705, DE-A-12 10 174, DE-A-12 10 173 und DE-A-21 44 543 beschrieben.

Bevorzugt werden Harnstoffderivate, beispielsweise die cyclischen Kondensationsprodukte von Harnstoff mit Glyoxal (4,5-Dihydroxyimidazolidinon-2) oder von Harnstoff mit Formaldehyd und/oder Isobutyraldehyd (4-Hydroxy-5,5-dimethyl-hexahydropyrimidon-2) sowie Acetylendiharnstoff, insbesondere die veretherten oder unveretherten Methylolierungsprodukte, verwendet.

Besonders bevorzugt verwendet wird 4,5-Dihydroxyimidazolidinon-2 und/oder dessen Kondensationsprodukte mit Formaldehyd, Glyoxal oder Glutardialdehyd, wobei auch mindestens zwei der genannten Aldehyde verwendet werden können. Beispielsweise kann aus 1 mol 4,5-Dihydroxyimidazolidinon-2 mit 2 mol Formaldehyd das 1,3-Dimethylol-4,5-dihydroxyimidazolidinon-2 hergestellt werden, das mit 0,5 bis 2 Mol Glyoxal kondensiert werden kann.

Allgemein wird ein molares Harnstoff-Aldehyd-Verhältnis von 0,1:1 bis 10:1, bevorzugt 0,5:1 bis 2:1, bezogen auf unsubstituierten Harnstoff, verwendet.

Bei der Kondensationsreaktion können auch Alkohole, beispielsweise Methanol, Ethanol, n-Propanol, n-Butanol, Methylglykol oder deren Gemische mitverwendet werden, wobei partiell oder vollständig veretherte Kondensationsprodukte entstehen.

Kondensationsprodukte auf Basis cyclischer Harnstoffe und Glyoxal sind beispielsweise in der US-A-4 285 690 und der US-A-4 343 655 beschrieben.

Zur Herstellung der für die erfindungsgemäße Verwendung eingesetzten Bindemittel werden 5 bis 80 Gew.% der Komponente A) mit 20 bis 95 Gew.% der Komponente B) gemischt. Der bevorzugte Bereich des Mischungsverhältnisses aus Komponente A) zu Komponente B) kann je nach Art der Komponente B) differieren. Für wasserlösliche Melaminharze auf der Basis methanolveretherter Produkte und 1,3-Dimethylol-4,5-dihydroxyimidazolidinon-2 wird das Verhältnis von 50 bis 70 Gew.% der Komponente A) zu 30 bis 50 Gew.% der Komponente B) bevorzugt. Werden Harnstoff/Formaldehyd-Kondensationsprodukte als Komponente B) eingesetzt, so liegt das bevorzugte Mischungsverhältnis bei 10 bis 60 Gew.% der Komponente A) zu 40 bis 90 Gew.% der Komponente B). Im allgemeinen ist eine Vorkondensation des erfindungsgemäßen Bindemittels aus A) und B) nicht notwendig. Wunschgemäß kann eine derartige Vorkondensation gegebenenfalls in Anwesenheit von 0,1 bis 1,0 Gew.% organischer oder anorganischer Säure wie p-Toluolsulfonsäure bei 40 bis 70°C durchgeführt werden, insbesondere bei Verträglichkeitsproblemen der Komponenten oder zur partiellen Veretherung des Vernetzungsmittels.

Beispiele für Kombinationen aus Keton-Formaldehyd-Kondensationsprodukte mit Phenol-Formaldehyd-Kondensationsprodukten sind in den US-A-2 191 802 und der US-A-2 634 249 beschrieben.

Beispiele für die Kombination von Keton-Formaldehydharzen mit Melaminharzen sind in der JP-A-85/18 551 beschrieben. Die Produkte werden in organischen Lösungsmitteln hergestellt und verarbeitet.

Die Bindemittel werden mit 0,1 bis 6 Gew.%, bevorzugt 1 bis 3 Gew.%, eines die thermische Aushärtung beschleunigenden Katalysators versetzt und mit Wasser auf 10 bis 25 Gew.% verdünnt.

Als Katalysatoren kommen Säuren bzw. latentsaure Katalysatoren und Metallsalze in Betracht. Bevorzugt sind p-Toluolsulfonsäure, Ammoniumchlorid, Ammoniumhydrogenphosphat und die Nitrate, Chloride und Acetate von Magnesium und Calcium. Zur Aushärtung der beschichteten Vliese kommen die üblichen Härtungsbedingungen, beispielsweise Temperaturen von 120 bis 250°C und Verweilzeiten von 1 bis 30 min, zur Anwendung.

Die Mineral- oder Textilvliese können aus natürlichen oder synthetischen organischen Fasern, z.B. aus Polyamiden, Polyethylenglykolterephthalat, Polypropylen, Cellulose und/oder Viskose sowie mineralischen Fasern, z.B. Gesteinswolle oder vorzugsweise Glasfasern bestehen, wobei die Fasern die übliche Länge und Stärke aufweisen. Bei der Verfestigung der Vliese werden die wäßrigen Harzlösungen im allgemeinen in einer Konzentration von 10 bis 25 Gew.% eingesetzt und durch Imprägnieren der Vliese appliziert, wobei die Vliese z.B. durch ein Bad der Tränkharze geführt und dann in an sich üblicher Weise abgequetscht werden. Die Vliese lassen sich auch mit den Harzlösungen besprühen und mit geschäumten Harzlösungen behandeln. Die imprägnierten Vliese werden dann nach dem Trocknen bei Temperaturen von 120 bis 250°C in an sich üblicher Weise getempert, wobei die Harze aushärten.

Erfindungsgemäß geeignete Bindemittel sind wasserlöslich und stabil in wäßriger Lösung, weisen niedrige Gehalte an freiem und thermisch abspaltbarem Formaldehyd auf und haben nach dem Härten eine hohe Haftung zu den beschichteten Vliesen.

Die mit dem erfindungsgemäßen Bindemittel beschichteten Vliese weisen gute mechanische Eigenschaften auf, wie hohe Reißfestigkeit und hohe Dehnung, hohe Wasserfestigkeit, wie aus den guten Werten für den sogenannten Kochwaschverlust aus der Tabelle abgeleitet werden kann.

Beispiele

Herstellung von Harzkomponenten A

A/I. Aceton/Formaldehyd-Kondensationsprodukt mit einem molaren Aceton/Formaldehyd-Verhältnis von 1:5

In 131,25 g Aceton, 848,31 g 40 gew.%ige wäßrige Formaldehyd-Lösung, 961,0 g Wasser und 131,25 g Butanol wurden 31,75 g Calciumoxid bei 40°C eingetragen und gut gerührt. Nach Erreichen des Gehaltes an freiem Formaldehyd von 0,28 Gew.% wurde die Reaktionsmischung mit Ameisensäure auf einen pH-Wert von 6,5 eingestellt und Wasser unter vermindertem Druck und bei einer Temperatur von nicht höher als 70°C abdestilliert. Der Rückstand wurde mit 817 g Methanol verdünnt und über ein Druckfilter filtriert. Methanol wurde bei vermindertem Druck und einer Temperatur von 70°C entfernt und der Rückstand mit 130 g Wasser verdünnt.

Es wurden 500 g eines leicht gelb gefärbten Produktes erhalten, dessen Feststoffgehalt nach DIN 53 216 (2 g Einwaage, 2 Stunden bei 125°C) bei 70 Gew.% bei einem Wassergehalt von 24,8 Gew.% lag. Der Feststoffgehalt nach der Planwägeglasmethode nach Heidbrink*) betrug 74,1 Gew.%, der Aschegehalt betrug 0,11 Gew.%, der Gehalt an freiem Formaldehyd lag bei 0,55 Gew.% und die Carbonylzahl betrug 105,0 mg KOH/g Feststoff nach Heidbrink.

Die emittierten Mengen an bei der Härtung abgespaltenem Formaldehyd, gemessen nach der in Melliand Textilbetrichte 54, (1973), Seiten 415-418, 529-532 und 669-675 beschriebenen Methode, können bis auf Werte von 0,1 Gew.%, bezogen auf den Festharzanteil, reduziert werden.

A/II. Aceton/Formaldehyd-Kondensationsprodukt mit einem molaren Aceton/Formaldehyd-Verhältnis von 1:4

In 132,0 g Aceton, 1203 g, 40 gew.%ige wäßrige Formaldehyd-Lösung, 180 g Methanol wurden 33 g Calciumoxide bei 40°C eingetragen und gut gerührt. Nach Erreichen eines Gehaltes an freiem Formaldehyd von 0,9 Gew.% wurde die Reaktionsmischung mit Ameisensäure bis auf einen pH-Wert von 6,45 versetzt und entsprechend Produkt A) unter Verwendung von 1400 g Methanol aufgearbeitet. Die Ausbeute betrug 612,0 g.

Der Feststoffgehalt des schwach gefärbten Produktes lag bei 80,0 Gew.%, der Feststoffgehalt nach Heidbrink*) betrug 93,5 Gew.%, der Aschegehalt betrug 0,45 Gew.%, der Gehalt an freiem Formaldehyd lag bei 0,85 Gew.% und die Carbonylzahl betrug 184 mg KOH/g Feststoff nach Heidbrink*).

Beispiel 1

Ein genadeltes Polyester-Spinnvlies von ca. 190 g/m$^2$ wurde mit einer ca. 12 gew.-%igen wäßrigen Bindemittelflotte imprägniert und der Überschuß an Bindemittelflotte abgequetscht. Der Abquetschdruck wurde so eingestellt, daß nach dem Trocknen des Vlieses bei 170°C ein Bindemittelgehalt von ca. 20 Gew.-%, bezogen auf das Fasergewicht, erzielt wurde. Das imprägnierte und getrocknete Vlies hatte dann ein Gewicht von ca. 230 g/m$^2$.

Die Bindemittelflotte bestand aus

| | |
|---|---|
| 60 g (fest) | eines Harzes nach Vorschrift A/I |
| 40 g (fest) | eines Melaminharzes mit ca. 3 mit Methanol veretherten N-Methylolgruppen |
| 1 g (fest) | Ammonchlorid |

Beispiel 2

In derselben Weise wie im Beispiel 1 wurde ein genadeltes Polyester-Vlies mit einer Bindemittelflotte aus

| | |
|---|---|
| 60 g (fest) | eines Harzes nach Vorschrift A/II |
| 40 g (fest) | eines Melaminharzes mit ca. 3 mit Methanol veretherten N-Methylolgruppen |
| 1 g (fest) | Ammonchlorid |

gebunden.

*) nach DIN 53 189, Einwaage 0,2 g 70 gew.%ige wäßrige Lösung, Trocknung des Prüfkörpers mit und ohne Substanz über $P_2O_5$ 2 Stunden bei Raumtemperatur im Wasserstrahlvakuum)

Beispiel 3

In derselben Weise wie im Beispiel 1 wurde ein genadeltes Polyester-Spinnvlies mit folgender Bindemittelflotte gebunden:

70 g (fest)      eines Harzes nach Vorschrift A/I
30 g (fest)      1,3-Dimethylol-4,5-dihydroxyimidazolidinon-2
1 g (fest)      Ammonchlorid

Beispiel 4

Ein Glasvlies mit einem Gewicht von ca. 25 g/m$^2$ wurde mit einer 15 gew.%igen wäßrigen Binderflotte imprägniert. Mit Hilfe eines umlaufenden Polyester-Gewebes wurde das Glasvlies über einen Saugschlitz geführt, der den Überschuß an Binderflotte entfernte. Der Saugzug wurde so eingestellt, daß das Glasvlies nach dem Trocknen bei 180° C etwa 20 Gew.-% Binder (fest), bezogen auf Glasgewicht, enthielt.

Die Bindemittelflotte bestand aus:
50 g (fest)      Harz nach Vorschrift A/I
50 g (fest)      1,3-Dimethylol-4,5-dihydroxyimidazolidinon-2
1 g (fest)      Ammonchlorid

In der Tabelle 1 sind die Reißfestigkeiten und Dehnung der Vliese nach den Beispielen 1 bis 4 zusammengestellt.

| Tabelle 1 | Reißfestigkeit [N/5 cm Breite] | Dehnung [%] | Auswasch- verlust [%] |
|---|---|---|---|
| Vlies nach Beispiel 1 | 613 | 61 | - |
| Vlies nach Beispiel 2 | 674 | 64 | - |
| Vlies nach Beispiel 3 | 703 | 66 | - |
| Vlies nach Beispiel 4 | 108,5 | - | 1,4 |

**Patentansprüche**

1. Vliese aus anorganischem oder organischem Fasermaterial, gebunden mit einer gehärteten Harzmischung, bestehend im wesentlichen aus
   A) 5 bis 80 Gew.% eines wasserlöslichen, durch alkalische Kondensation hergestellten Produktes der Carbonylzahl 0 bis 200 aus 0,1 bis 0,4 mol eines aliphatischen oder cycloaliphatischen kondensationsfähigen Ketons und 1 mol Formaldehyd und
   B) 20 bis 95 Gew.% eines wasserlöslichen Amino- und/oder Phenolharzes.

2. Vliese nach Anspruch 1 erhältlich mit einer Bindemittelkomponente A) der Carbonylzahl 40 bis 180.

3. Vliese nach einem der Ansprüche 1 oder 2, erhältlich mit einer Bindemittelkomponente A), in der das Molverhältnis von Keton zu Formaldehyd 0,2 bis 0,25 beträgt.

4. Vliese nach einem der Ansprüche 1 bis 3, erhältlich aus einem wasserlöslichen Harnstoffharz als Komponente B).

5. Vliese nach einem der Ansprüche 1 bis 4, erhältlich mit einer Bindemittelkomponente B, die aus 4,5-Dihydroxyimidazolidinon-2 und/oder dessen unveretherten, partiell veretherten oder vollständig veretherten Kondensationsprodukten mit Formaldehyd, Glyoxal und/oder Glutardialdehyd, besteht.

6. Vliese nach einem der Ansprüche 1 bis 5, erhältlich mit 1,3-Dimethylol-4,5dihydroxyimidazolidinon-2 als Komponente B).

## EP 0 281 921 B1

**7.** Vliese nach einem der Ansprüche 1 bis 3, erhältlich aus einem wasserlöslichen Melaminharz als Komponente B).

**8.** Verfahren zur Herstellung von Vliesen aus anorganischem oder organischem Fasermaterial durch Imprägnierung des ungebundenen Vliesmaterials mit einem Bindemittel aus wäßriger Lösung, Trocknung des imprägnierten Vliesmaterials und anschließende Härtung des Bindemittels, dadurch gekennzeichnet, daß man als Bindemittel eine Harzmischung gemäß den Ansprüchen 1 bis 7 verwendet.

**Claims**

**1.** A web composed of inorganic or organic fiber material bonded with a cured resin mixture consisting essentially of
A) from 5 to 80% by weight of a water-soluble condensation product of carbonyl number 0-200 which has been prepared by alkaline condensation from 0.1 - 0.4 mole of an aliphatic or cycloaliphatic condensable ketone and 1 mole of formaldehyde, and
B) from 20 to 95% by weight of a water-soluble amino and/or phenolic resin.

**2.** A web as claimed in claim 1 obtainable with a binder component A) of carbonyl number 40-180.

**3.** A web as claimed in claim 1 or 2 obtainable with a binder component A) where the molar ratio of ketone: formaldehyde ranges from 0.2 to 0.25.

**4.** A web as claimed in any of claims 1 to 3 obtainable from a water-soluble urea resin as component B).

**5.** A web as claimed in any of claims 1 to 4 obtainable with a binder component B comprising 4,5-dihydroxyimidazolidin-2-one and/or an unetherified, partially etherified or completely etherified condensation product thereof with formaldehyde, glyoxal and/or glutardialdehyde.

**6.** A web as claimed in any of claims 1 to 5 obtainable with 1,3-dimethylol-4,5-dihydroxyimidazolidin-2-one as component B).

**7.** A web as claimed in any of claims 1 to 3, obtainable from a water-soluble melamine resin as component B).

**8.** A process for producing a web composed of inorganic or organic fiber material by impregnating the unbonded web material with a binder from aqueous solution, drying the impregnated web material and subsequently curing the binder, which comprises using a resin mixture as defined in any of claims 1 to 7 as binder.

**Revendications**

**1.** Nappes de fibres minérales ou organiques liées par un mélange de résines durci se composant essentiellement
A) de 5 à 80% en poids d'un produit hydrosoluble, ayant un indice de carbonyle de 0 à 200, préparé par condensation alcaline de 0,1 à 0,4 mole d'une cétone aliphatique ou cycloaliphatique susceptible de condensation et de 1 mole de formaldéhyde, et
B) de 20 à 95% en poids d'une résine aminoplaste et/ou phénolique hydrosoluble.

**2.** Nappes selon la revendication 1, obtenues avec un composant A) du liant ayant un indice de carbonyle de 40 à 180.

**3.** Nappes selon la revendication 1 ou 2, obtenues avec un composant A) du liant dans lequel le rapport molaire de la cétone au formaldéhyde est compris entre 0,2 et 0,25.

**4.** Nappes selon l'une quelconque des revendications 1 à 3, obtenues à partir d'une résine d'urée hydrosoluble en tant que composant B).

**5.** Nappes selon l'une quelconque des revendications 1 à 4, obtenues avec un composant B) du liant qui est constitué par de la 4,5-dihydroxyimidazolidinone-2 et/ou des produits de condensation non éthérifiés, partiellement éthérifiés ou complètement éthérifiés de celle-ci avec du formaldéhyde, du glyoxal et/ou du dialdéhyde glutarique.

**6.** Nappes selon l'une quelconque des revendications 1 à 5, obtenues avec de la 1,3-diméthylol-4,5-dihydroxyimidazolidinone-2 en tant que composant B).

**7.** Nappes selon l'une quelconque des revendications 1 à 3, obtenues à partir d'une résine de mélamine hydrosoluble en tant que composant B).

**8.** Procédé de fabrication de nappes de fibres minérales ou organiques, par imprégnation de la matière en nappe non liée avec un liant en solution aqueuse, séchage de la matière en nappe imprégnée, puis durcissement du liant, caractérisé en ce qu'on utilise, comme liant, un mélange de résines selon l'une quelconque des revendications 1 à 7.